# EUROPÄISCHE PATENTANMELDUNG

(11) **EP 0 641 600 A2**
(43) Veröffentlichungstag der Anmeldung: **08.03.1995**
(21) Anmeldenummer: 94890140.0
(22) Anmeldetag: 01.09.1994
(51) Int. Cl.: B02C 1/02, B02C 19/14

(54) **Brechereinrichtung**

(30) Priorität: 07.09.1993 AT 1797/93
(71) Anmelder: Binder & Co. Aktiengesellschaft, A-8200 Gleisdorf (AT)
(72) Erfinder: Anibas, Franz, Ing., A-8200 Gleisdorf (AT); Macenka, Heimo, Dipl.-Ing., A-8200 Gleisdorf (AT); Gschweitl, Karlheinz, A-8211 Grosspesendorf (AT)
(74) Vertreter: Kliment, Peter

(57) **Zusammenfassung**

Um bei einer Brechereinrichtung, vorzugsweise zum selektiven Zerkleinern von Sammelglas, die Menge von feinen Bruchstücken zu vermindern, wird vorgeschlagen, daß innerhalb eines feststehenden Rahmens (7) eine mit dem Rahmen (7) starr verbundene, feststehende Platte (1) und eine mit dem Rahmen (7) beweglich verbundene Platte (1) in einem spitzen, nach oben offenen Winkel (15) zueinander unter Ausbildung eines durch einen Mindestabstand der unteren Endbereiche (1b, 2b) der Platten (1,2) zueinander definierten Spaltes (10b) angeordnet sind, und daß Mittel zum krafterregten Bewegen der beweglichen Platte (2) relativ zur feststehenden Platte (2), vorgesehen sind.

## Beschreibung

Die Erfindung betrifft eine Brechereinrichtung, vorzugsweise zum selektiven Zerkleinern von Sammelglas, mit einer innerhalb eines feststehenden Rahmens mit dem Rahmen starr verbundenen, feststehenden Platte und einer mit dem Rahmen beweglich verbundenen Platte, welche in einem spitzen, nach oben offenen Winkel unter Ausbildung eines durch einen Mindestabstand der unteren Endbereiche der Platten zueinander definierten Spalt angeordnet sind, wobei Mittel zum krafterregten Bewegen der beweglichen Platte relativ zur feststehenden Platte, vorgesehen sind.

Bedingt durch den zunehmenden Einsatz von Altglas in der Glasindustrie besteht die Notwendigkeit Sortiervorgänge zum Ausscheiden von Fremdkörpern und Fehlfarben weitgehend zu automatisieren. Solchen Sortiereinrichtungen ist eines gemeinsam: Ihre Funktion ist dann gewährleistet, wenn sich die Korngröβenverteilung des sortierenden Glasgemenges innerhalb gewisser Größen bewegt. So ist es z.B. nicht sinnvoll, der Sortiereinrichtung zu kleine Scherben zuzuführen, da neben einer unsicheren Erkennung beim Ausscheiden von Fehlstoffen auch eine größere Menge des eigentlichen Werkstoffes mit ausgebracht wird. Andererseits bringen zu große Scherben oder ganze Glasbehälter, speziell bei pneumatischem Ausscheidevorgang, durch ihr hohes Gewicht Probleme hinsichtlich der Ausscheidesicherheit. Weiters ist es von Bedeutung, daß z.B. Flaschenverschlüsse, die als Fehlstoffe anzusehen sind, so aufbereitet werden, daß möglichst wenig Glas (= Wertstoff) an ihnen anhaftet. Daraus ist ersichtlich, daß der Vorbehandlung von Altglas größere Aufmerksamkeit geschenkt werden muß, da die Sortiereinrichtungen die besten Ergebnisse liefern, wenn das Aufgabegut aus selektiv gebrochenem Sammelglas besteht.

Herkömmliche Brecheinrichtungen erzeugen bei der Zerkleinerung von Sammelglas ein Bruchgemisch, in dem ein großer Anteil an sehr kleinen Scherben (unter 5 mm Korngröße) enthalten ist. Damit wird eine nicht unerhebliche Menge wertvolles Altglas dem Recycling entzogen, da es oft aus qualitativen Gründen ausgesiebt und verworfen werden muß.

Aus der DE-PS 888 799 ist ein Backenbrecher der eingangs genannten Art bekannt, bei welchem die bewegliche Platte über einen Kurbeltrieb zyklisch zur feststehenden Platte hin- und wieder von dieser wegbewegt wird. Die einander gegenüberliegenden Brechbacken der feststehenden Platte und der beweglichen Platte weisen Brecherzähne auf. Diese Vorrichtung ist insoferne ungünstig, als ein Verstopfen durch sich zwischen den Brechbacken angesammeltem Material nicht wirksam ausgeschlossen werden kann, da der Materialvorschub ausschließlich durch das Eigengewicht der Bruchstücke zustande kommt. Dies hat zur weiteren Folge, daß die Bruchstückgröße starken Schwankungen unterliegt, wobei ein hoher Anteil von sehr kleinen Scherben auftritt. Tritt ein Blockieren der Brechbacken auf, so kann eine Demontage der Brechbacken notwendig werden. Abgesehen davon benötigt der Kurbeltrieb relativ viel Platz und weist viele Bauteile auf.

Eine ähnliche Vorrichtung für Studienzwecke ist aus dem SU-Erfinderschein Nr. 902 803 bekannt. Auch hier erfolgt der Antrieb der beweglichen Platte über einen Kurbeltrieb. Die bereits genannten Nachteile treten auch hier auf.

Ziel der Erfindung ist es, diese Nachteile zu vermeiden und eine Brechereinrichtung zu schaffen, welche bei der Zerkleinerung von Sammelglas ein Bruchgemisch erzeugt, das möglichst wenig kleine Bruchstücke enthält.

Erfindungsgemäß wird dies dadurch erreicht, daß die Mittel zum Bewegen der beweglichen Platte aus einem auf der beweglichen Platte montierten Unwuchterreger bestehen. Das Altglas gelangt in den nach oben offenen Winkelbereich und wird durch die Bewegung der beiden Platten relativ zueinander zerkleinert. Durch den Unwuchterreger wird die bewegliche Platte in eine etwa elliptische Bewegung versetzt, wodurch die Vorschubbewegung der Bruchstücke in Folge des Eigengewichtes unterstützt und ein Blockieren der Backen weitgehend vermieden wird. Durch den gleichmäßigeren Materialdurchsatz kann der Anteil an zu kleinen Scherben deutlich reduziert werden.

Gleichmäßige, nicht zu kleine Bruchstücke können besonders dann erzeugt werden, wenn die bewegliche Platte in ihrem oberen und ihrem unteren Endbereich jeweils über mindestens ein, vorzugsweise vorgespanntes, Federelement mit dem Rahmen verbunden ist. Die Federelemente können dabei als sogenannte Rosta-Elemente ausgeführt sein. Befindet sich nun im Aufgabegut eine oder mehrere unzerbrochene Glasflaschen, so kann die bewegliche Platte leicht ausweichen, da das untere Federelement durch den Druck der ganzen Flasche auf die bewegliche Platte entspannt wird. Die Flasche wird dadurch in nicht zu kleine Scherben zerkleinert. Die Vorspannung der Federelemente wird in einfacher Weise dadurch erreicht, daß die bewegliche Platte in einer in Richtung der feststehenden Platte geneigten Schräglage angeordnet ist.

Weiters ist vorgesehen, daß im oberen Brecherbereich zwischen den Platten eine optische Erkennungseinrichtung vorgesehen ist, über welche eine Verstopfung des Brechers feststellbar ist. Sollte es zu einer Verstopfung der Brecheinrichtung kommen, so wird dies durch die Erkennungseinrichtung im oberen Bereich des Brechers angezeigt. Um die Verstopfung zu beseitigen, ist es sehr vorteilhaft, wenn eine am Rahmen montierte, auf den unteren Endbereich der Platte wirkende Stelleinheit vorgesehen ist, welche es ermöglicht, die bewegliche Platte von einer Arbeitsstellung in eine von der starren Platte entfernte Entlastungsstellung zu bringen.

In einer bevorzugten Ausführungsvariante ist dabei vorgesehen, daß die Stelleinheit über ein Gestänge am unteren Federelement angreift, wobei das Gestänge einen Hebel beinhaltet, dessen Drehachse etwa zu den Platten parallel ist. Bei einer eventuell auftretenden Verstopfung der Brechereinrichtung ist es damit möglich, die bewegliche Platte durch die Stelleinheit in die Entlastungsstellung zu schwenken und auf diese Weise die Verstopfung einfach zu beheben.

Die Größe der Bruchstücke wird durch den Abstand der Platten zueinander bestimmt. Um auf die Bruchstückgröße Einfluß nehmen zu können, ist es vorteilhaft, wenn die Entfernung der Drehachse des Hebels bezüglich der feststehenden Platte und damit der Spalt zwischen den Endbereichen der beweglichen Platte und der feststehenden Platte verstellbar ist.

Ein zuverlässiger Betrieb ist insbesondere dann möglich, wenn an den einander gegenüberliegenden Seiten der feststehenden Platte und der beweglichen Platte Brecherzähne aufweisende Schleißbleche angeordnet sind.

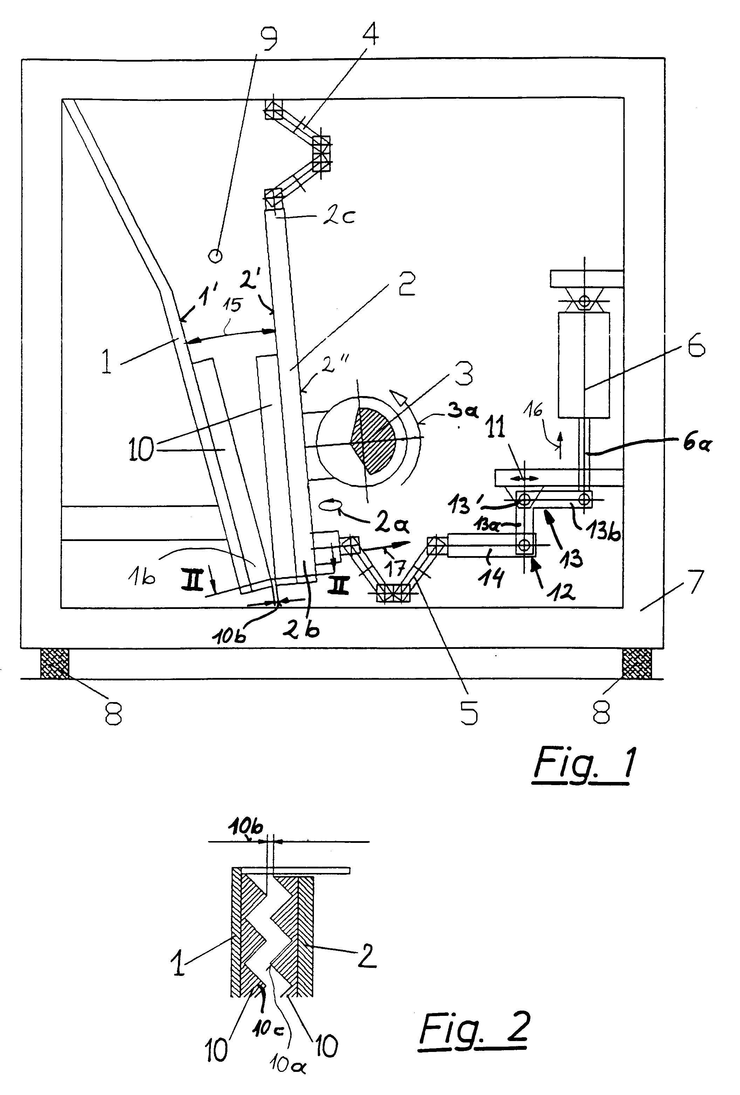

Die Erfindung wird anhand der Figuren näher erläutert. Es zeigen Fig. 1 eine Seitenansicht der erfindungsgemäßen Brechereinrichtung, Fig. 2 einen Schnitt durch die erfindungsgemäße Brechereinrichtung nach der Linie II-II in Fig. 1.

An einem starren Rahmen 7 ist eine feststehende Platte 1 in einer Schräglage starr befestigt. Ihr gegenüber ist die bewegliche Platte 2, über die Federelemente 4 und 5 in einer leicht in Richtung der feststehenden Platte geneigten Schräglage im Rahmen 7 aufgehängt, wobei die beiden Platten 1 und 2 zueinander einen spitzen Winkel 15 einschließen.

An der Rückseite 2'' der beweglichen Platte 2 ist ein Unwuchterreger 3, beispielsweise ein Unwuchtmotor, montiert, der die federnd gelagerte bewegliche Platte 2 in etwa elliptische Bewegungen 2a versetzt. Mit 3a ist die Rotationsrichtung des Unwuchterregers 3 bezeichnet. In der Fig. 1 sind die Federelemente 4 und 5 als sogenannte, an sich bekannte, Rosta-Elemente dargestellt, jedoch sind auch andere Federn oder Federelemente einsetzbar.

Das untere Ende der beweglichen Platte 2b ist über das untere Federelement 5 sowie über ein Gestänge 12 mit dem Rahmen 7 verbunden. Das Gestänge 12 weist einen Hebel 13 auf, dessen im Rahmen 7 fest gelagerte Drehachse 13' etwa parallel zu den Platten 1 und 2 ausgerichtet ist. Die Drehachse 13' kann in einer quer auf die Platten 1 und 2 stehenden Richtung 11 verstellt werden. Während ein Arm 13a des Hebels 13 über ein Zwischenelement 14 am unteren Federelement 5 angreift, ist der andere Arm 13b mit einer Stelleinheit 6 verbunden, welche am Rahmen 7 befestigt ist. Die Verstelleinrichtung 6 ermöglichen es, durch Bewegung der Kolbenstange 6a in Richtung 16 den Hebel 13 auszulenken, wodurch die bewegliche Platte 2 von der feststehenden Platte 1 in eine Entlastungsstellung weggeschwenkt werden kann, wie durch den Pfeil 17 angedeutet ist. Dies ist notwendig, wenn durch die Erkennungseinrichtung 9 eine Verstopfung der Brechereinrichtung signalisiert wird. Durch dieses Wegschwenken der beweglichen Platte 2 von der feststehenden Platte 1 kann die Verstopfung in einfacher Weise behoben werden.

Die einander zugewandten Seiten 1' und 2' der feststehenden Platte 1 und der beweglichen Platte 2 sind mit Schleißblechen 10 bestückt.

Wie in Fig. 2 erkennbar ist, sind die Schleißbleche 10 zahnartig geformt. Maßgebend für die Größe der Bruchstücke ist der zwischen zwei gegenüberliegenden Zahnspitzen 10a ausgebildete Spalt 10b. Der Spalt 10b zwischen den Zahnspitzen 10a der Brecherzähne 10c kann durch Verschiebung der Drehachse 13' des Hebels 13 innerhalb gewisser Grenzen verstellt werden.

Da alle Einbauten im starren Rahmen 7 angebracht sind, und dieser Rahmen 7 auf schwingungsdämpfenden Auflagerelementen 8 gelagert ist, kommt es nach außen nur zu geringen Vibrationen.

## Patentansprüche

1. Brechereinrichtung, vorzugsweise zum selektiven Zerkleinern von Sammelglas, mit einer innerhalb eines feststehenden Rahmens (7) mit dem Rahmen (7) starr verbundenen, feststehenden Platte (1) und einer mit dem Rahmen (7) beweglich verbundenen Platte (2), welche in einem spitzen, nach oben offenen Winkel (15) unter Ausbildung eines durch einen Mindestabstand der unteren Endbereiche (1b, 2b) der Platten (1, 2) zueinander definierten Spalt (10b) angeordnet sind, wobei Mittel zum krafterregten Bewegen der beweglichen Platte (2) relativ zur feststehenden Platte (1), vorgesehen sind, **dadurch gekennzeichnet**, daß die Mittel zum Bewegen der beweglichen Platte (2) aus einem auf der beweglichen Platte (2) montierten Unwuchterreger (3) bestehen.

2. Brechereinrichtung nach Anspruch 1, **dadurch gekennzeichnet,** daß die bewegliche Platte (2) in ihrem oberen und ihrem unteren Endbereich (2b, 2c) jeweils über mindestens ein, vorzugsweise vorgespanntes, Federelement (4, 5) mit dem Rahmen (7) verbunden ist.

3. Brechereinrichtung nach Anspruch 1 oder 2, **dadurch gekennzeichnet,** daß die bewegliche Platte (2) in einer in Richtung der feststehenden Platte (1) geneigten Schräglage angeordnet ist.

4. Brechereinrichtung nach einem der Ansprüche 1 bis 3, **dadurch gekennzeichnet**, daß im oberen Brecherbereich zwischen den Platten eine optische Erkennungseinrichtung (9) vorgesehen ist, über welche eine Verstopfung des Brechers feststellbar ist.

5. Brechereinrichtung nach einem der Ansprüche 1 bis 4, **dadurch gekennzeichnet**, daß eine am Rahmen (7) montierte, auf den unteren Endbereich (2b) der beweglichen Platte (2) wirkende Stelleinheit (6) vorgesehen ist, welche es ermöglicht, die bewegliche Platte (2) von einer Arbeitsstellung in eine von der starren Platte entfernte Entlastungsstellung zu bringen.

6. Brechereinrichtung nach Anspruch 5, **dadurch gekennzeichnet,** daß die Stelleinheit (6) über ein Gestänge (12) am unteren Federelement (5) angreift, wobei das Gestänge (12) einen Hebel (13) beinhaltet, dessen Drehachse (13') etwa zu den Platten (2,3) parallel ist.

7. Brechereinrichtung nach Anspruch 6, **dadurch gekennzeichnet**, daß die Entfernung der Drehachse (13') des Hebels (13) bezüglich der feststehenden Platte (1) und damit der Spalt (10b) zwischen den Endbereichen (2b,1b) der beweglichen Platte (2) und der feststehenden Platte (1) verstellbar ist.

8. Brechereinrichtung nach Anspruch 6, **dadurch gekennzeichnet,** daß an den einander gegenüberliegenden Seiten (1', 2') der feststehenden Platte (1) und der beweglichen Platte (2) Brecherzähne (10c) aufweisende Schleißbleche (10) angeordnet sind.
